# FASCICULE DE BREVET EUROPEEN

(11) **EP 1 050 436 B1**
(45) Date de publication et mention de la délivrance du brevet: **29.09.2004**
(21) Numéro de dépôt: 00440075.0
(22) Date de dépôt: 16.03.2000
(51) Int. Cl.: B60R 13/02, B60R 21/20

(54) **Dispositif pour le montage et la fixation d'un élément de garniture ou de recouvrement**
Einrichtung zur Montage und Befestigung eines Verkleidungs- oder Abdeckelements
Device for mounting and fixing a trim or covering element

(30) Priorité: 07.05.1999 FR 9905962
(43) Date de publication de la demande: 08.11.2000
(73) Titulaire: JOHNSON CONTROLS - ROTH (Société par Actions Simplifiée), 67100 Strasbourg Meinau (FR)
(72) Inventeur: Thomae, Gérald, 67500 Haguenau (FR); Luisetti, Raymond, 67500 Haguenau (FR); Bulle, Hervé, 67800 Hoenheim (FR); Adam epouse Knorr, Marie-Christine, 67850 Herrlisheim (FR); Steffen epouse Ginsz, Marie-Andrée, 67270 Kienheim (FR)
(74) Mandataire: Nuss, Pierre

(56) Documents cités:
- EP-A- 0 595 512
- DE-A- 3 919 500
- DE-A- 19 724 594
- FR-A- 2 761 313
- US-A- 4 717 301

## Description

La présente invention concerne le domaine de la solidarisation de pièces et d'éléments entre eux et sur des supports, notamment des éléments de couverture et de garniture, et a pour objet un dispositif pour le montage et la fixation d'un élément de garniture ou de recouvrement.

Il existe différentes applications et configurations de solidarisation d'éléments de recouvrement ou de garniture entre eux et sur un support, dans lesquelles il est nécessaire que la liaison de solidarisation autorise le passage d'un élément recouvert sans que la liaison d'assemblage ne soit rompue ou que ladite pièce ou ledit élément ne soit fractionné(e).

Tel est notamment le cas pour les garnitures de custodes dans les véhicules automobiles, depuis la mise en place de coussins gonflables de sécurité à ce niveau pour la protection latérale des têtes des passagers arrière et/ou avant en cas de choc.

Ces coussins gonflables, logés essentiellement sous la garniture de pavillon, doivent pouvoir se déployer à l'intérieur de l'habitacle et il est donc nécessaire de pouvoir créer une ouverture pour leur passage.

Or, à ce jour, aucune solution simple et satisfaisante autant du point de l'esthétisme, que des points de vue de la fiabilité et de la sécurité, n'a été proposée.

En effet, les solutions connues entraînent, lors du déploiement du coussin de sécurité, soit la projection de la garniture de custode à l'intérieur de l'habitacle lorsque la solidarisation est trop faible, soit le fractionnement de ladite garniture de custode et/ou de ladite garniture de pavillon et la projection de débris dans l'habitacle, ou encore le non déploiement dudit coussin.

Le problème posé à la présente invention consiste, par conséquent, à fournir un dispositif de montage et de fixation d'un élément de garniture ou de recouvrement, notamment d'une garniture de custode, ne nuisant pas à l'aspect esthétique (donc caché), permettant un montage fiable. rapide et aisé, assurant une conservation de l'assemblage au cours et après le passage de l'élément recouvert évitant notamment toute projection, et autorisant, le cas échéant, un démontage sans détérioration en vue d'une opération de contrôle ou de maintenance.

Par le document DE-A-39 19 500, on connaît un dispositif pour le montage et la fixation d'un élément présentant sensiblement les caractéristiques du préambule de la revendication 1.

Toutefois, la pièce d'assemblage mise en oeuvre dans ce document présente une structure complexe avec des parties constitutives élastiquement déformables. De plus, ce document mentionne uniquement un montage avec centrage et sous contrainte élastique et ne fait pas état d'une seconde position d'assemblage après montage, résultant d'un déplacement sous contrainte.

Les caractéristiques particulières de l'invention permettant de répondre au problème posé précité sont exposées dans la partie caractérisante de la revendication 1 et dans la partie caractérisante de la revendication 2, correspondant à deux modes de réalisation de l'invention.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A à 1D sont des vues de détail et en coupe illustrant le montage d'une pièce de solidarisation faisant partie d'un dispositif de montage et de fixation selon un premier mode de réalisation de l'invention ;
les figures 2A et 2B sont, respectivement, des vues en perspective et de dessous d'une garniture de pavillon illustrant la mise en place de la pièce de solidarisation représentée sur les figures 1A à 1D sur une garniture de pavillon pourvue de découpes ;
la figure 3 est une vue schématique de dessous montrant la position d'assemblage finale de la pièce de solidarisation avec la garniture de pavillon telle que représentée sur les figures 2A et 2B ;
la figure 4 est une vue en perspective d'une pièce de solidarisation selon un premier mode de réalisation de l'invention ;
la figure 5 est une vue en perspective d'une pièce formant des points de liaisonnement d'élément de garniture sur la carrosserie d'un véhicule automobile ;
la figure 6 est une vue partielle en perspective d'un dispositif de montage et de fixation selon un second mode de réalisation de l'invention pour la solidarisation d'une custode à un pavillon ;
la figure 6A est une vue en perspective du détail A de la figure 6 ;
les figures 7A, 7B et 7C sont respectivement des vues de dessus, en coupe selon A-A et en perspective d'une pièce de solidarisation selon un second mode de réalisation de l'invention, et,
les figures 8A et 8B sont respectivement des vues de dessus en perspective et en coupe longitudinale de la pièce rapportée formant insert représentée sur la figure 6A.

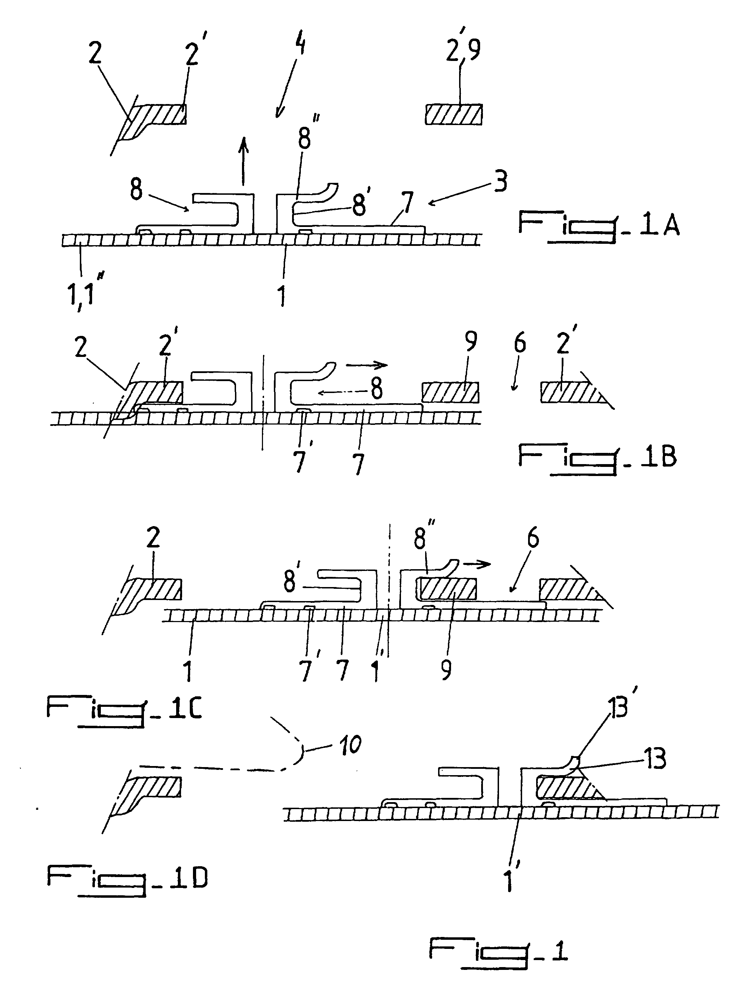

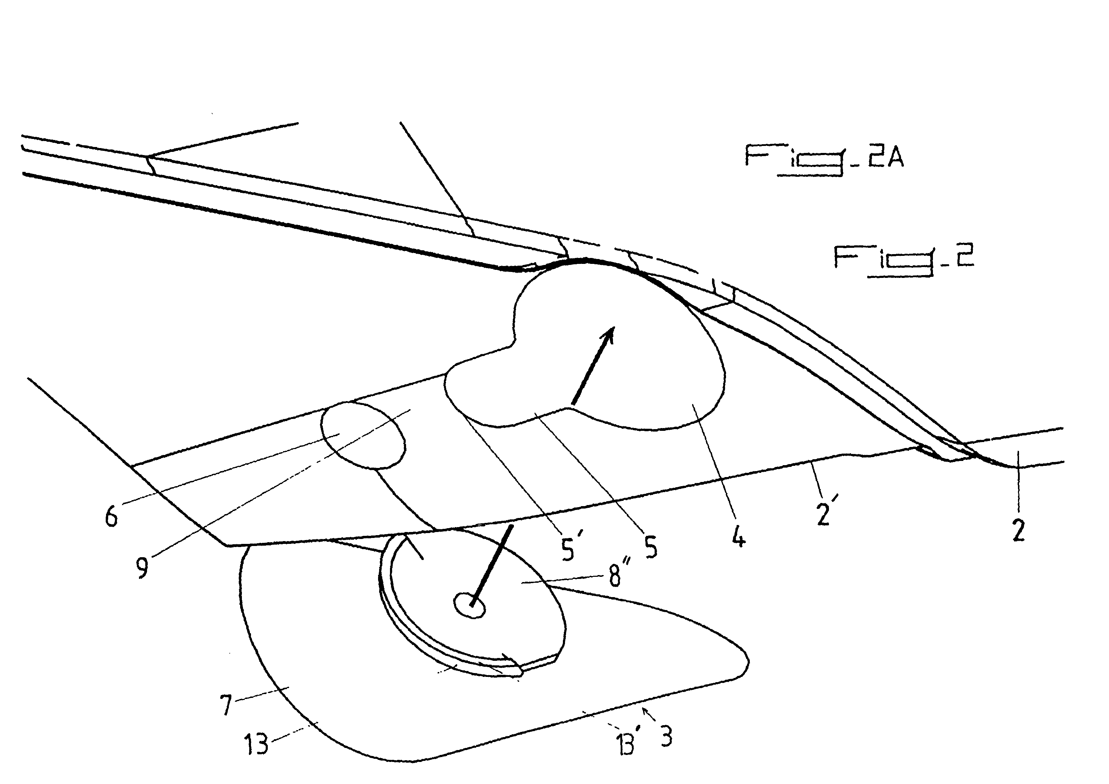

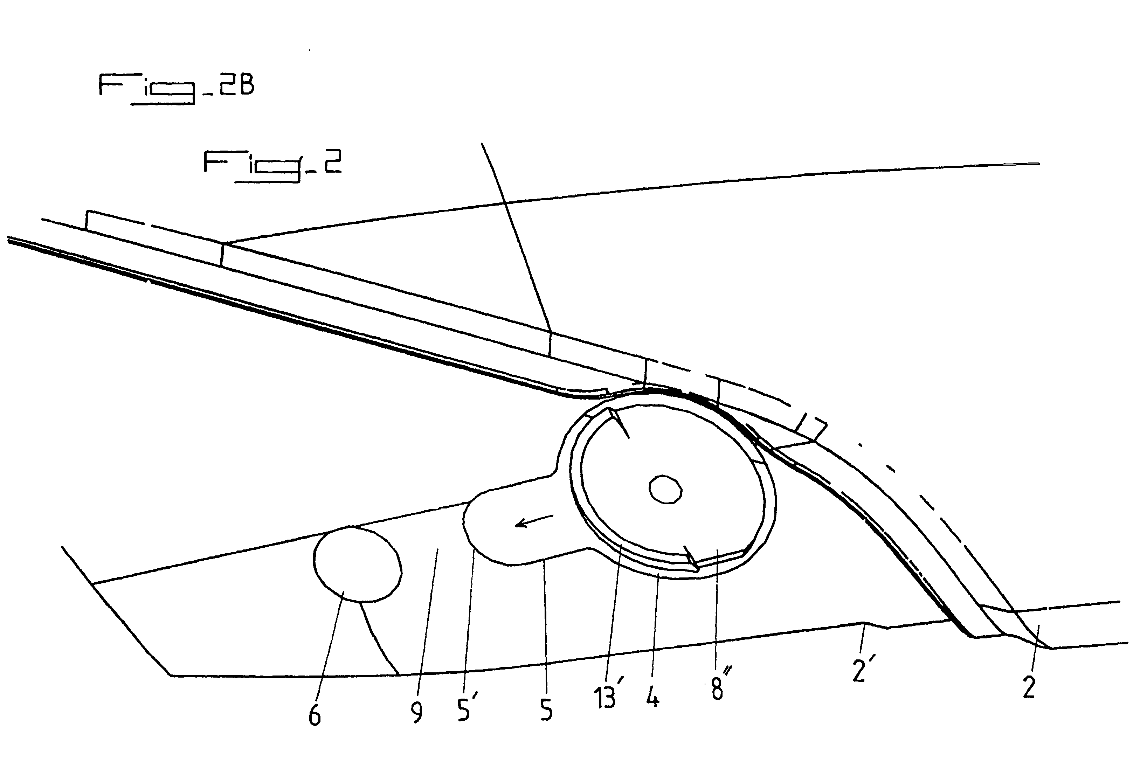

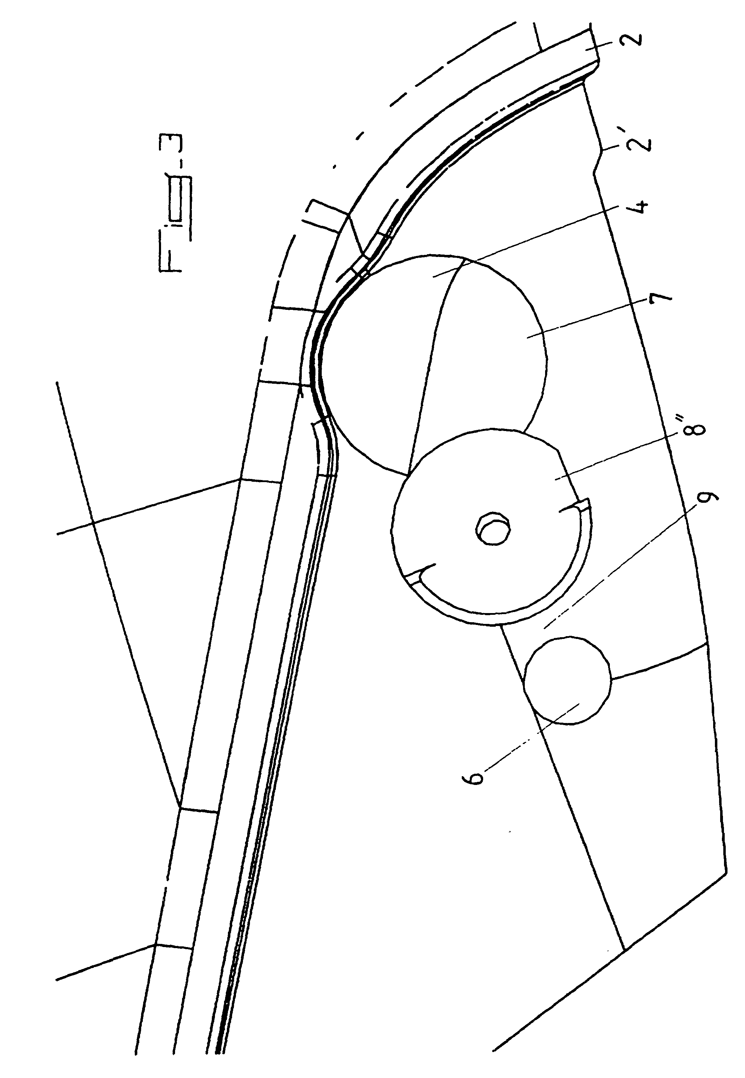

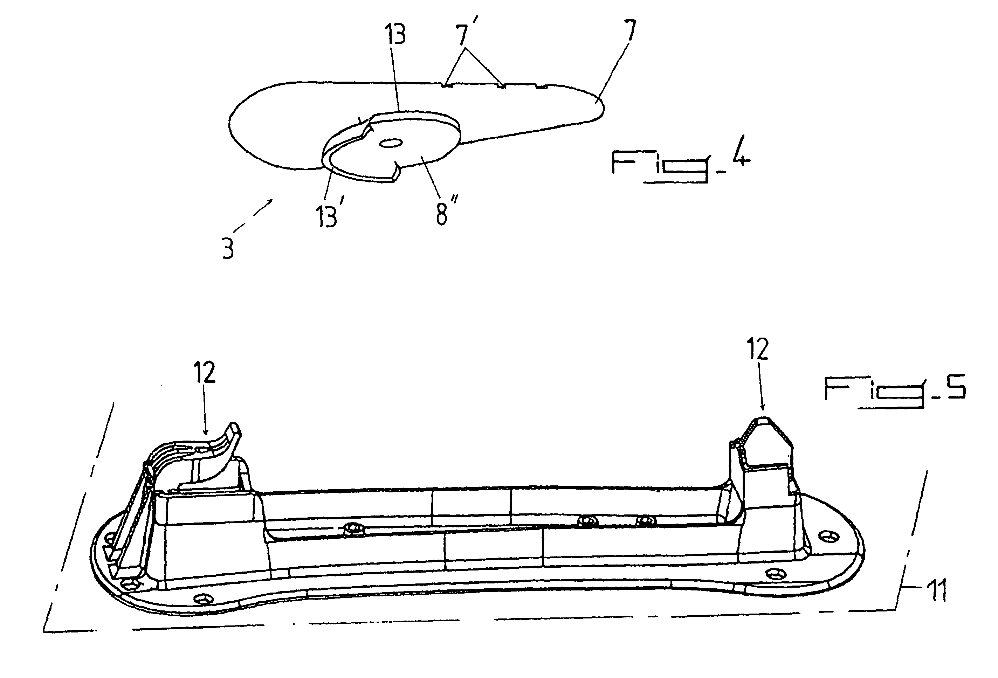

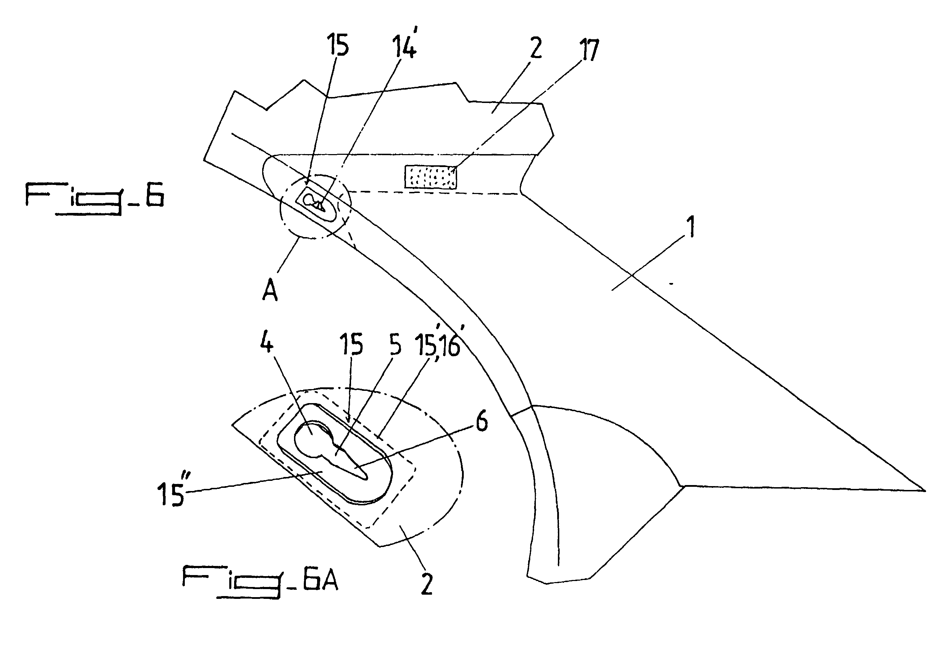

Les figures 3 et 6 notamment des dessins annexés représentent le dispositif selon l'invention pour le montage et la fixation d'un élément 1 de garniture ou de recouvrement, par exemple une garniture de custode ou de montant de baie de véhicule automobile.

Au moins une partie de bord 1' dudit élément 1 est pourvue d'une pièce de solidarisation 3 avec un autre élément de garniture 2 fixe, par exemple une garniture de pavillon, au niveau d'une zone de chevauchement entre le premier et le second éléments de garniture précités 1 et 2, ledit second élément de garniture 2 étant pourvu de découpes 4, 5, 6, ou d'une pièce rapportée 15 munie de découpes 4, 5, 6, définissant pour ladite pièce de solidarisation 3 une ouverture de montage 4 et des positions d'assemblage desdits éléments de garniture 1 et 2 avant et après déplacement sous contrainte de ladite partie de bord 1' au moins, de manière à autoriser un déplacement limité sous contrainte de ladite partie de bord 1' au moins dudit élément 1, sans désolidarisation, ni fractionnement, de ce dernier.

Selon l'invention, et comme représentée en particulier aux figures 1, 2, 4, 6, 7 et 8 des dessins annexés, la pièce de solidarisation 3 est constituée par une plaque de base 7 destinée à être fixée, par exemple par collage, sur la face de la partie de bord 1' tournée vers le second élément de garniture 2 et par une partie d'accrochage saillante 8 composée d'une portion de liaison 8' ; 14 s'étendant sensiblement perpendiculairement à ladite plaque de base 7 et se terminant par une partie formant tête 8" ; 14' et présentant une surface de projection plane supérieure à la surface de la section de la portion de liaison 8' ; 14, le second élément de garniture 2 comportant une découpe formée par, ou une pièce 15 comprenant, un orifice 4 autorisant le passage de la tête 8" ; 14' et prolongé par une rainure 5 dont la largeur est inférieure aux dimensions correspondantes de ladite tête 8" ; 14' et présentant, le cas échéant, un moyen définissant la position d'assemblage des éléments de garniture 1 et 2 avant déplacement sous contrainte de ladite partie de bord 1'.

Les découpes 4, 5 de réception du second élément 2 ou de la pièce rapportée 15 forme ainsi une boutonnière autorisant une introduction aisée de la tête 8" ; 14', puis un verrouillage sûr en position d'assemblage finale, par exemple au fond 5' de la rainure 5 (à l'opposé de l'orifice de passage 4), au niveau d'un étranglement de ladite rainure 5, au niveau d'un élément rapporté formant butée ou par un moyen d'immobilisation avec résistance limitée analogue.

Les figures 1A à 1C illustrent, à titre d'exemple et sur la base d'un premier mode de réalisation de l'invention, les trois opérations successives de l'assemblage de la partie de bord 1' avec le second élément de garniture 2, à savoir, l'introduction de la tête 8" de la partie saillante 8 de la pièce de solidarisation 3 dans l'orifice 4 (Fig 1A), puis l'engagement de la pièce 3 et sa translation dans la rainure 5 (Fig 1B) et, enfin, son calage au fond 5' de la rainure 5 (Fig 1C), préférentiellement avec un léger pincement du matériau alentour du second élément de garniture 2 entre la tête 8" et la plaque de base 7.

En vue d'obtenir des surfaces apparentes affleurantes, la zone ou partie du second élément de garniture 2 chevauchée par la partie de bord 1' du premier élément de garniture 1, pourra présenter une épaisseur plus faible de manière à former une dépression 2' dont la profondeur et la forme correspondent respectivement à l'épaisseur et à la forme extérieure de la partie de bord 1' (voir figures 2A et 2B).

Comme le montre notamment la figure 4 des dessins annexés et conformément au premier mode de réalisation de l'invention, la portion de liaison 8' peut consister en un manchon préférentiellement cylindrique, à section circulaire ou non. La tête 8" peut présenter une forme en plaque s'étendant sensiblement parallèlement à ladite plaque de base 7 et consiste en un disque, le diamètre dudit disque 8" étant supérieur au diamètre dudit manchon 8' et avantageusement consister en un disque, le diamètre dudit disque 8" étant supérieur au diamètre dudit manchon 8', ce dernier pouvant présenter un passage traversant débouchant au niveau de la plaque de base 7 et de la tête 8".

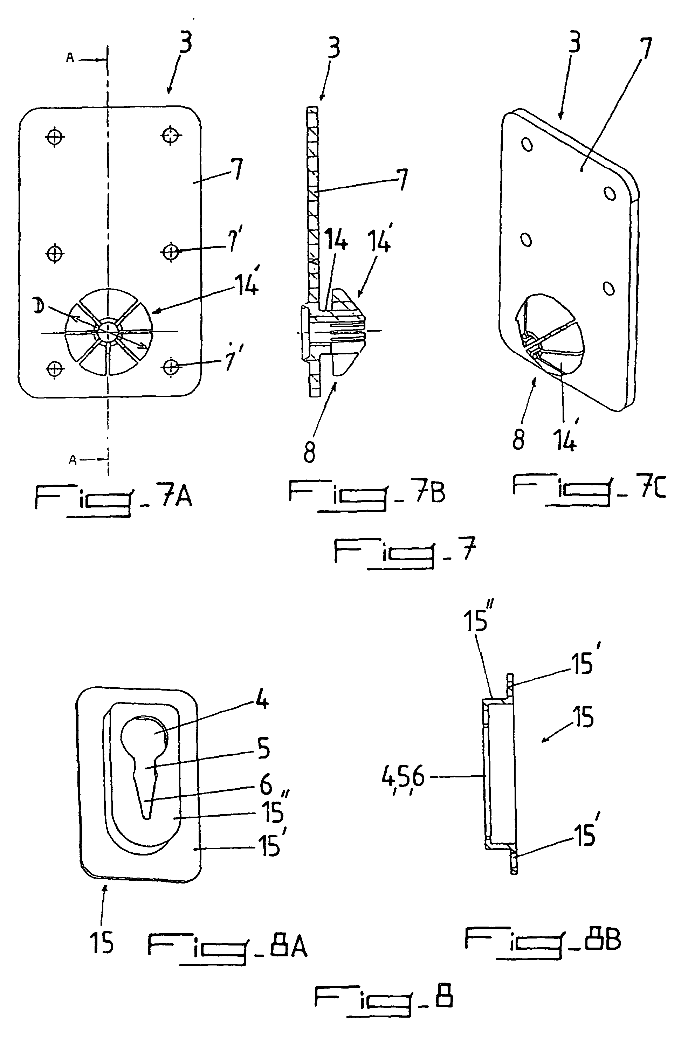

Conformément à un second mode de réalisation de l'invention, représenté notamment à la figure 7 des dessins annexés, la portion de liaison 14, en forme de manchon ou de tige, se termine par une tête sensiblement tronconique 14', fendue longitudinalement selon plusieurs plans de coupe mutuellement sécants au niveau de l'axe longitudinal et dont le diamètre maximal D est au moins égal, et préférentiellement légèrement supérieur, au diamètre de l'ouverture de montage 4.

Une telle constitution de la tête 14' en une pluralité de lamelles élastiques (la portion de liaison 14 pourra éventuellement aussi être au moins partiellement fendue) permettra de réaliser un montage par encliquetage résilient de ladite tête 14' dans ladite ouverture de montage 4.

Selon une caractéristique de l'invention, représentée sur les figures 1, 2, 3 et 8A des dessins annexés, la découpe 6 du second élément de garniture 2 ou de la pièce 15 rapportée sur cette dernière, déterminant la position d'assemblage après déplacement sous contrainte de la partie de bord 1' est située à une distance prédéterminée de la position d'assemblage avant déplacement, est séparée de cette dernière par au moins un segment ou élément rapporté formant barrière ou frein 9 ou par une portion de matériau constituant ledit second élément de garniture 2, de largeur prédéterminée, et présente des dimensions n'autorisant pas le passage de la tête en forme de plaque 8" ou de la tête tronconique fendue 14'.

Dans le mode de réalisation représenté sur les figures 1 à 4, la portion de matériau 9, ou le cas échéant l'élément barrière rapporté correspondant, présentera une résistance suffisamment grande pour assurer un assemblage et un blocage en position sûrs de l'élément 1, mais toutefois limitée à une valeur prédéterminée pour que, sous l'action d'une poussée d'intensité donnée sur le premier élément de garniture 1, il y ait obligatoirement rupture de cette portion de matériau 9 et déplacement dirigé de la pièce de solidarisation 3 de sa première position d'assemblage au fond 5' de la rainure 5 vers une seconde position d'assemblage calée dans la découpe 6 (Fig. 1D).

Il est bien évidemment possible de prévoir également, si nécessaire, plusieurs portions ou éléments barrière ou freins 9 successifs, autorisant un déplacement de plus grande longueur et adapté à différentes intensités de poussée.

Conformément à un autre mode de réalisation de l'invention, représenté notamment aux figures 6, 6A et 8 des dessins annexés, la pièce rapportée 15 munie de découpes 4, 5, 6 peut consister en un insert, par exemple en matière plastique injectée, destiné à être monté dans un orifice 16 de forme correspondante ménagé dans le second élément de garniture 2 et à être solidarisé avec ce dernier, par exemple par collage, au niveau de zones de bord 15', 16' chevauchantes respectives, les découpes 4, 5, 6 étant contigües et ménagées au fond d'une empreinte ou d'une dépression 15", décalé par rapport au plan de la zone de bord 15' dudit insert, la partie de découpe 6 déterminant la position d'assemblage après déplacement sous contrainte de la partie de bord 1' consistant en un prolongement avec rétrécissement progressif de la rainure 5.

Une position d'assemblage normal calée pourra être définie au niveau de l'interface rainure 5 / prolongement 6.

Lors du déplacement relatif sous contrainte entre la partie de bord 1' du premier élément 1 et le second élément 2, la tête 14' et la portion de liaison 14 auront tendance à se déplacer vers le fond rétréci du prolongement 6 en cul-de-sac, ce qui résultera en un pincement progressif de ladite portion 14 et finalement en un blocage dans une position déterminée le long dudit prolongement 6 fonction de la force de déplacement ou de séparation appliquée.

Conformément à une forme de réalisation préférentielle de l'invention, la direction et la longueur du déplacement sous contrainte autorisé de la partie de bord 1' du premier élément de garniture 1 sont telles qu'il permet d'aboutir, à la fin dudit déplacement sous contrainte, à un interstice de passage autorisant le déploiement, à travers lui, d'un coussin gonflable de sécurité 10 situé initialement à l'état replié sous le second élément de garniture 2, par exemple sous forme de garniture de pavillon, le déplacement sous contrainte de ladite partie de bord 1' étant provoqué par ledit déploiement dudit coussin 10.

Lors de son déploiement, le coussin gonflable 10 aura donc tendance à soulever les portions chevauchantes 1' et 2' et à rompre la liaison entre la partie de bord 1' et la partie correspondante 2' de l'élément de garniture fixe 2.

Le décollement de ces portions 1' et 2' au moins de la carrosserie 11 et le mouvement relatif entre celles-ci, créera le passage permettant le déploiement dudit coussin 10 dans l'habitacle.

Pour éviter tout fractionnement de l'élément de garniture 1 sous l'action de la poussée exercée sur la partie de bord 1', il peut être prévu de limiter, voire d'annuler, la transmission de l'effort de poussée entre cette partie 1' et le reste de l'élément 1.

A cet effet, l'élément de garniture 1 peut présenter au moins à l'arrière de la partie de bord 1' portant la pièce de solidarisation 3 une ligne de déformation ou une zone déformable, autorisant un repliement local dudit élément de garniture 1 lors du déplacement de ladite partie de bord 1', la partie restante 1" de l'élément de garniture 1 demeurant préférentiellement fixée sur la carrosserie 11 du véhicule automobile lors dudit déplacement.

Cette zone ou ligne de déformation pourra par exemple être obtenue par compression du matériau de l'élément de garniture 1, pour réaliser une empreinte de forme adaptée.

De manière avantageuse, l'élément de garniture 1 peut également être entièrement constitué d'un matériau déformable (par exemple un complexe comprenant une âme en mousse, éventuellement préformée et partiellement rigidifiée par une armature, recouverte d'un textile sur sa face visible) et être fixée à la carrosserie 11 par des points de liaisonnement 12 par enclenchement ou par engagement distribués sur la surface dudit élément de garniture 1, à l'exception de la partie de bord 1'.

En variante, ou en plus des points de liaisonnement 12 par encliquetage précités, la partie de bord 1' de l'élément de garniture 1 peut être solidarisée, au niveau de sa portion chevauchant l'élément de garniture 2 et à au moins un emplacement distant de la pièce de solidarisation 3, par une bande 17 de matériau pourvue d'une pluralité de picots, préférentiellement à têtes carrées ou hexagonales, destinés à s'accrocher dans le matériau textile recouvrant l'élément de garniture 2, et rapportée sur la face arrière de ladite portion chevauchante de la partie de bord 1'.

De telles fixations supplémentaires seront notamment nécessaires lorsque les zones recevant la pièce 3 ou les découpes 4, 5, 6 sont situées en bordures des parties chevauchantes des éléments 1 et 2 pour réaliser une solidarisation supplémentaire.

La bande 17 mise en oeuvre pourra par exemple consister en une bande d'un matériau connu sous la désignation "Microplast" par la société Binder.

La réduction, voire l'annulation, de la transmission de l'effort de poussée entre la partie de bord 1 et la partie restante 1" autorisera notamment la conservation de l'assemblage au niveau d'au moins certains des points de liaisonnement 12 et donc la rétention de l'élément de garniture 1 en au moins deux points d'ancrage, préférentiellement situés à des extrémités opposées dudit élément 1, évitant ainsi tout mouvement de battement de ce dernier dans l'habitacle.

Selon une caractéristique supplémentaire de l'invention, et en vue de garantir un déplacement dans une direction prédéterminée de la pièce de solidarisation 3 et une rétention sûre de cette dernière dans la position finale d'assemblage après déplacement, il peut être prévu, en outre, que le second élément de garniture 2 présente une structure renforcée et/ou rigidifiée autour de la partie de découpe 6 définissant la position d'assemblage après déplacement de la partie de bord 1' et, le cas échéant, le long des bords de la rainure 5 et de part et d'autre de la portion de matériau 9 séparant le fond 5' cette dernière de la découpe 6 précitée, de manière, à constituer un véritable rail de guidage de la pièce 3.

Cette structure renforcée peut, par exemple, être obtenu en intégrant localement dans le matériau constituant l'élément de garniture 2 autour des découpes 5 et 6 une armature de renforcement, par exemple, une nappe textile en des fibres résistantes.

Il est également possible de cercler le bord circonférentiel de la découpe 6 par un revêtement rigide, par exemple métallique, telle qu'une bande métallique pliée autour du bord et faisant le tour de ladite découpe 6.

De telles dispositions supplémentaires permettront, outre le renforcement de la liaison, également de diriger le déplacement de la pièce de solidarisation 3 le long de ladite découpe 6 dans la direction désirée, même lorsque la direction d'application des forces et de sollicitation s'écarte de cette dernière.

En outre, il peut aussi être prévu de renforcer, de manière similaire, dans le cas du montage d'une pièce rapportée 15, la zone de bord 16' de la découpe 16 recevant la pièce 15.

Comme le montrent les figures 1, 4 et 7 des dessins annexés, la plaque de base 7 de la pièce de solidarisation 3 peut présenter sur sa face destinée à être appliquée sur la partie de bord 1', une pluralité de réservations ou de renfoncements 7' pour la réception d'agent collant et la réalisation d'un accrochage mécanique après solidification de l'agent collant, cette plaque de base 7 pouvant présenter, le cas échéant, une surface suffisante pour rigidifier la totalité de la partie de bord 1' destinée à être déplacée.

Certains des renfoncements 7' pourront être débouchants (voir figure 7A) pour permettre la création de champignons de colle et un ancrage mécanique plus résistant, d'autres non pour éviter des déformations apparentes au niveau des éléments 1 et 2.

De plus, la tête 8" en forme de plaque du premier mode de réalisation peut présenter un bord inférieur 13 arrondi et, le cas échéant, un rebord proéminent 13' sur le côté frontal lors de l'engagement de ladite pièce de solidarisation 3 dans la rainure 5, de manière à faciliter le déplacement de ladite pièce 3 dans ladite rainure 5.

On notera que l'ordre de chevauchement et le rôle des deux éléments de garniture 1 et 2 peuvent être inversés sans modification substantielle de l'invention.

La présente invention a également pour objet un véhicule automobile comprenant notamment une garniture de pavillon 2 et des garnitures de custodes 1 assemblées avec cette dernière au niveau de portions chevauchantes 1' et 2' et équipée de coussins de sécurité gonflables latéraux arrières 10 situés sous la garniture de pavillon 2, à proximité desdites portions chevauchantes.

Conformément à la présente invention, ces garnitures 1 de custodes sont montées et fixées au moyen de dispositifs de montage et de fixation tels que décrits ci-dessus, notamment sur la garniture de pavillon 2 et, le cas échéant, sur la carrosserie 11 du véhicule automobile.

Il est également possible, comme indiqué précédemment, de monter de manière similaire une ou plusieurs garniture(s) de montants de baies et, notamment, de les solidariser au moyen de dispositifs de montage et de fixation selon l'invention, avec la garniture de pavillon ou analogue.

## Revendications

1. Dispositif pour le montage et la fixation d'un élément de garniture ou de recouvrement, par exemple une garniture de custode ou de montant de baie de véhicule automobile, au moins une partie de bord (1') dudit élément (1) étant pourvue d'une pièce de solidarisation (3) avec un autre élément de garniture (2) fixe, par exemple une garniture de pavillon, au niveau d'une zone de chevauchement entre le premier et le second éléments de garniture précités (1 et 2), ledit second élément de garniture (2) étant pourvu de découpes (4, 5, 6), ou d'une pièce rapportée (15) munie de découpes (4, 5, 6) définissant pour ladite pièce de solidarisation (3) une ouverture de montage (4) et des positions d'assemblage desdits éléments de garniture (1 et 2) avant et après déplacement sous contrainte de ladite partie de bord (1') au moins, de manière à autoriser un déplacement limité sous contrainte d'une partie de bord au moins dudit élément, sans désolidarisation ;
la pièce de solidarisation (3) étant constituée par une plaque de base (7) destinée à être fixée, par exemple par collage, sur la face de la partie de bord (1') tournée vers le second élément de garniture (2) et par une partie d'accrochage saillante (8) composée d'une portion de liaison (8'; 14) s'étendant sensiblement perpendiculairement à ladite plaque de base (7) et se terminant par une partie formant tête (8" ; 14') et présentant une surface de projection plane supérieure à la surface de la section de la portion de liaison (8' ; 14) ;
le second élément de garniture (2) comportant une découpe formée par, ou une pièce (15) comprenant, un orifice (4) autorisant le passage de la tête (8" ; 14') et prolongé par une rainure (5) dont la largeur est inférieure aux dimensions correspondantes de ladite tête (8" ; 14');
la découpe (6) du second élément de garniture (2) ou de la pièce rapportée (15) sur cette dernière, qui détermine la position d'assemblage après déplacement sous contrainte de la partie de bord (1'), étant située à une distance prédéterminée de la position d'assemblage avant déplacement, et présentant des dimensions n'autorisant pas le passage de la tête (8" ; 14') ;
dispositif **caractérisé en ce que** ladite découpe (6) déterminant la position d'assemblage après déplacement sous contrainte de la partie de bord (1') est séparée de la position d'assemblage avant déplacement par au moins un segment ou élément rapporté formant barrière ou frein (9) ou par une portion de matériau constituant ledit second élément de garniture (2), de largeur prédétérminée.

2. Dispositif pour le montage et la fixation d'un élément de garniture ou de recouvrement, par exemple une garniture de custode ou de montant de baie de véhicule automobile, au moins une partie de bord (1') dudit élément (1) étant pourvue d'une pièce de solidarisation (3) avec un autre élément de garniture (2) fixe, par exemple une garniture de pavillon, au niveau d'une zone de chevauchement entre le premier et le second éléments de garniture précités (1 et 2), ledit second élément de garniture (2) étant pourvu d'une pièce rapportée (15) munie de découpes (4, 5, 6) définissant pour ladite pièce de solidarisation (3) une ouverture de montage (4) et des positions d'assemblage desdits éléments de garniture et 2) avant et après déplacement sous contrainte de ladite partie de bord (1') au moins, de manière à autoriser un déplacement limité sous contrainte d'une partie de bord au moins dudit élément, sans désolidarisation ;
la pièce de solidarisation (3) étant constituée par une plaque de base (7) destinée à être fixée, par exemple par collage, sur la face de la partie de bord (1') tournée vers le second élément de garniture (2) et par une partie d'accrochage saillante (8) composée d'une portion de liaison (8' ; 14) s'étendant sensiblement perpendiculairement à ladite plaque de base (7) et se terminant par une partie formant tête (8" ; 14') et présentant une surface de projection plane supérieure à la surface de la section de la portion de liaison (8' ; 14) ;
le second élément de garniture (2) comportant une pièce (15) comprenant un orifice (4) autorisant le passage de la tête (8" ; 14') et prolongé par une rainure (5) dont la largeur est inférieure aux dimensions correspondantes de ladite tête (8" ; 14') ;
dispositif **caractérisé en ce que** la pièce rapportée (15) munie de découpes (4, 5, 6) consiste en un insert, par exemple en matière plastique injectée, destiné à être monté dans un orifice (16) de forme correspondante ménagé dans le second élément de garniture (2) et à être solidarisé avec ce dernier, par exemple par collage, au niveau de zones de bord (15', 16') chevauchantes respectives, les découpes (4, 5, 6) étant contiguës et ménagées au fond d'une empreinte ou d'une dépression (15"), décalé par rapport au plan de la zone de bord (15') dudit insert, la partie de découpe (6) déterminant la position d'assemblage après déplacement sous contrainte de la partie de bord (1') consistant en un prolongement avec rétrécissement progressif de la rainure (5).

3. Dispositif de montage et de fixation selon la revendication 1 ou 2 **caractérisé en ce que** le second élément de garniture (2) présente un moyen définissant la position d'assemblage des éléments de garniture (1 et 2) avant déplacement sous contrainte de ladite partie de bord (1').

4. Dispositif de montage et de fixation selon l'une quelconque des revendications 1 à 3, **caractérisé en ce que** la portion de liaison (8') consiste en un manchon, préférentiellement cylindrique à section circulaire ou non, et **en ce que** la tête (8") présente une forme en plaque s'étendant sensiblement parallèlement à ladite plaque de base (7) et consiste en un disque, le diamètre dudit disque (8") étant supérieur au diamètre dudit manchon (8').

5. Dispositif de montage et de fixation selon l'une quelconque des revendications 1 à 3 **caractérisé en ce que** la portion de liaison (14), en forme de manchon ou de tige, se termine par une tête sensiblement tronconique (14'), fendue longitudinalement selon plusieurs plans de coupe mutuellement sécants au niveau de l'axe longitudinal et dont le diamètre maximal (D) est au moins égal, et préférentiellement légèrement supérieur, au diamètre de l'ouverture de montage (4).

6. Dispositif de montage et de fixation selon l'une quelconque des revendications 1 et 3 à 5 **caractérisé en ce que** le second élément de garniture (2) présente une structure renforcée et/ou rigidifiée autour de la partie de découpe (6) définissant la position d'assemblage après déplacement de la partie de bord (1') et, le cas échéant, le long des bords de la rainure (5) et de part et d'autre de la portion de matériau (9) séparant le fond (5') cette dernière de la découpe (6) précitée.

7. Dispositif de montage et de fixation selon l'une quelconque des revendications 1 à 6, **caractérisé en ce que** la direction et la longueur du déplacement sous contrainte de la partie de bord (1') du premier élément de garniture (1) sont telles qu'il permet d'aboutir, à la fin dudit déplacement sous contrainte, à un interstice de passage autorisant le déploiement, à travers lui, d'un coussin gonflable de sécurité (10) situé initialement à l'état replié sous le second élément de garniture (2), par exemple sous forme de garniture de pavillon, le déplacement sous contrainte de ladite partie de bord (1') étant provoqué par ledit déploiement dudit coussin (10).

8. Dispositif de montage et de fixation selon l'une quelconque des revendications 1 à 7, **caractérisé en ce que** l'élément de garniture (1) présente au moins à l'arrière de la partie de bord (1') portant la pièce de solidarisation (3) une ligne de déformation ou une zone déformable, autorisant un repliement local dudit élément de garniture (1) lors du déplacement de ladite partie de bord (1'), la partie restante (1") de l'élément de gamiture (1) demeurant fixée sur la carrosserie (11) du véhicule automobile lors dudit déplacement.

9. Dispositif de montage et de fixation selon l'une quelconque des revendications 1 à 8, **caractérisé en ce que** l'élément de garniture (1) est entièrement constitué d'un matériau déformable et est fixée à la carrosserie (11) par des points de liaisonnement (12) par enclenchement ou par engagement distribués sur la surface dudit élément de garniture (1), à l'exception de la partie de bord (1').

10. Dispositif de montage et de fixation selon l'une quelconque des revendications 1 à 9, **caractérisé en ce que** la partie de bord (1') de l'élément de garniture (1) est solidarisée, au niveau de sa portion chevauchant l'élément de garniture (2) et à au moins un emplacement distant de la pièce de solidarisation (3), par une bande (17) de matériau pourvue d'une pluralité de picots, préférentiellement à têtes carrées ou hexagonales, destinés à s'accrocher dans le matériau textile recouvrant l'élément de garniture (2), et rapportée sur la face arrière de ladite portion chevauchante de la partie de bord (1').

11. Dispositif de montage et de fixation selon la revendication 4, **caractérisé en ce que** la plaque de base (7) de la pièce de solidarisation (3) présente sur sa face destinée à être appliquée sur la partie de bord (1'), une pluralité de réservations ou de renfoncements (7') pour la réception d'agent collant et **en ce que** la tête (8") en forme de plaque présente un bord inférieur (13) arrondi et, le cas échéant, un rebord proéminent (13') sur le côté frontal lors de l'engagement de ladite pièce de solidarisation (3) dans la rainure (5).

12. Véhicule automobile comprenant notamment une garniture de pavillon et des garnitures de custodes assemblées avec cette dernière au niveau de portions chevauchantes et équipée de coussins de sécurité gonflables latéraux arrières situés sous la garniture de pavillon, à proximité desdites portions chevauchantes, **caractérisé en ce que** les garnitures (1) de custodes sont montées et fixées au moyen de dispositifs selon l'une quelconque des revendications 1 à 11, notamment sur la garniture de pavillon (2) et, le cas échéant, sur la carrosserie (11) du véhicule automobile.

## Patentansprüche

1. Vorrichtung zur Montage und Befestigung eines Verkleidungs- oder Abdeckelements, zum Beispiel einer Verkleidung der Heckpartie oder des Windschutzscheibenpfostens des Kraftfahrzeugs, wobei mindestens ein Randteil (1') des Elements (1) mit einem Teil (3) zur Befestigung an. einem anderen, feststehenden Verkleidungselement (2), zum Beispiel einer Dachverkleidung, an einem Überlappungsbereich zwischen dem ersten und dem zweiten oben genannten Verkleidungselement (1 und 2) versehen ist, wobei das zweite Verkleidungselement (2) mit Ausschnitten (4., 5, 6) oder einem angefügten Teil (15), welches Ausschnitte (4, 5, 6) aufweist, versehen ist, die für das Befestigungsteil (3) eine Montageöffnung (4) und Zusammenfügepositionen der Verkleidungselemente (1 und 2) vor und nach dem Verschieben mindestens des Randteils (1') unter Belastung definieren, um eine begrenzte Verschiebung mindestens eines Randteils des Elements unter Belastung ohne Trennung zu gestatten;
wobei das Befestigungsteil (3) durch eine Grundplatte (7), die zum Beispiel durch Kleben an der zum zweiten Verkleidungselement (2) weisenden Fläche des Randteils (1') befestigt werden soll, und durch einen vorragenden Festhakteil (8) gebildet wird, der aus einem sich im Wesentlichen senkrecht zur Grundplatte (7) erstreckenden und durch einen Kopfteil (8''; 14') endenden Verbindungsteil (8'; 14) besteht, wobei der Kopfteil eine ebene Auskragungsfläche aufweist, die größer ist als die Querschnittsfläche des Verbindungsteils (8'; 14);
wobei das zweite Verkleidungselement (2) einen Ausschnitt, der durch eine Öffnung (4) gebildet wird, oder ein Teil (15), das eine Öffnung (4) aufweist, die das Durchlassen des Kopfs (8"; 14') gestattet und durch eine Nut (5) verlängert ist, deren Breite kleiner ist als die entsprechenden Abmessungen des Kopfs (8"; 14'), enthält;
wobei sich der Ausschnitt (6) des zweiten Verkleidungselements (2) oder des an Letzterem angefügten Teils (15), der die Zusammenfügeposition nach dem Verschieben des Randteils (1') unter Belastung bestimmt, vor dem Verschieben in einem vorbestimmten Abstand von der Zusammenfügeposition befindet und Abmessungen aufweist, die ein Durchlassen des Kopfs (8"; 14') nicht gestatten;
**dadurch gekennzeichnet, dass** der die Zusammenfügeposition nach dem Verschieben des Randteils (1') unter Belastung bestimmende Ausschnitt (6) vor dem Verschieben durch mindestens ein eine Sperre oder Bremse (9) bildendes angefügtes Segment oder Element oder durch einen das zweite Verkleidungselement (2) bildenden Materialteil vorbestimmter Breite von der Zusammenfügeposition getrennt ist.

2. Vorrichtung zur Montage und Befestigung eines Verkleidungs- oder Abdeckelements, zum Beispiel einer Verkleidung der Heckpartie oder des Windschutzscheibenpfostens des Kraftfahrzeugs, wobei mindestens ein Randteil (1') des Elements (1) mit einem Teil (3) zur Befestigung an einem anderen, feststehenden Verkleidungselement (2), zum Beispiel einer Dachverkleidung, an einem Überlappungsbereich zwischen dem ersten und dem zweiten oben genannten Verkleidungselement (1 und 2) versehen ist, wobei das zweite Verkleidungselement (2) mit einem angefügten Teil (15) versehen ist, welches mit Ausschnitten (4, 5, 6) versehen ist, die für das Befestigungsteil (3) eine Montageöffnung (4) und Zusammenfügepositionen der Verkleidungselemente (1 und 2) vor und nach dem Verschieben mindestens des Randteils (1') unter Belastung definieren, um eine begrenzte Verschiebung mindestens eines Randteils des Elements unter Belastung ohne Trennung zu gestatten;
wobei das Befestigungsteil (3) durch eine Grundplatte (7), die zum Beispiel durch Kleben an der zum zweiten Verkleidungselement (2) weisenden Fläche des Randteils (1') befestigt werden soll, und durch einen vorragenden Festhakteil (8) gebildet wird, der aus einem sich im Wesentlichen senkrecht zur Grundplatte (7) erstreckenden und durch einen Kopfteil (8"; 14') endenden Verbindungsteil (8'; 14) besteht und eine ebene Auskragungsfläche aufweist, die größer ist als die Querschnittsfläche des Verbindungsteils (8'; 14);
wobei das zweite Verkleidungselement (2) einen Teil (15) aufweist, der eine Öffnung (4.) umfasst, die das Durchlassen des Kopfs (8"; 14') gestattet und durch eine Nut (5) verlängert ist, deren Breite kleiner ist als die entsprechenden Abmessungen des Kopfs (8"; 14');
**dadurch gekennzeichnet, dass** das mit Ausschnitten (4, 5, 6) versehene angefügte Teil (15) aus einem Einsatz, zum Beispiel aus spritzgegossenem Kunststoff, besteht, der in eine im zweiten Verkleidungselement (2) ausgebildete Öffnung (16) entsprechender Form angebracht und mit dieser, zum Beispiel durch Kleben, an den jeweiligen überlappenden Randbereichen (15', 16') fest verbunden werden soll, wobei die Ausschnitte (4, 5, 6) aneinander angrenzen und im Grund einer Prägung oder einer Vertiefung (15'') ausgebildet sind, die zur Ebene des Randbereichs (15') des Einsatzes versetzt ist, wobei der Ausschnittsteil (6), der die Zusammenfügeposition nach dem Verschieben des Randteils (1') unter Belastung bestimmt, aus einer Verlängerung mit allmählicher Verengung der Nut (5) besteht.

3. Vorrichtung zur Montage und zur Befestigung nach Anspruch 1 oder 2, **dadurch gekennzeichnet, dass** das zweite Verkleidungselement (2) ein Mittel, das die Zusammenfügeposition der Verkleidungselement (1 und 2) vor dem Verschieben des Randteils (1') unter Belastung bestimmt, aufweist.

4. Vorrichtung zur Montage und zur Befestigung nach einem der Ansprüche 1 bis 3, **dadurch gekennzeichnet, dass** der Verbindungsteil (8') aus einer vorzugsweise zylindrischen Buchse mit gegebenenfalls kreisförmigem Querschnitt besteht und dass der Kopf (8'') die Form einer Platte aufweist, die sich im Wesentlichen parallel zur Grundplatte (7) erstreckt und aus einer Scheibe besteht, wobei der Durchmesser der Scheibe (8") größer ist als der Durchmesser der Buchse (8').

5. Vorrichtung zur Montage und zur Befestigung nach einem der Ansprüche 1 bis 3, **dadurch gekennzeichnet, dass** der Verbindungsteil (14) in Form einer Buchse oder einer Stange durch einen im Wesentlichen kegelstumpfförmigen Kopf (14') abschließt, der in Längsrichtung gemäß mehreren Schnittebenen, die sich gegenseitig an der Längsachse schneiden und deren maximaler Durchmesser (D) zumindest gleich dem Durchmesser der Montageöffnung (4) oder vorzugsweise etwas größer als dieser ist, geteilt ist.

6. Vorrichtung zur Montage und zur Befestigung nach einem der Ansprüche 1 und 3 bis 5, **dadurch gekennzeichnet, dass** das zweite Verkleidungselement (2) eine um den Ausschnittsteil (6), der die Zusammenfügeposition nach dem Verschieben des Randteils (1') bestimmt, und gegebenenfalls entlang den Rändern der Nut (5) und auf beiden Seiten des Materialteils (9), der den Grund (5') dieser Letzteren von dem vorgenannten Ausschnitt (6) trennt, verstärkte und/oder versteifte Konstruktion aufweist.

7. Vorrichtung zur Montage und zur Befestigung nach einem der Ansprüche 1 bis 6, **dadurch gekennzeichnet, dass** die Richtung und die Länge der Verschiebung des Randteils (1') des ersten Verkleidungselements (1) unter Belastung derart sind, dass es am Ende der Verschiebung unter Belastung den Erhalt einer Durchgangslücke gestattet, die das Entfalten eines aufblasbaren Sicherheitskissens (10) dadurch gestattet, das sich anfangs im zusammengefalteten Zustand unter dem zweiten Verkleidungselement (2), zum Beispiel in Form der Dachverkleidung, befindet, wobei das Verschieben des Randteils (1') unter Belastung durch das Entfalten des Kissens (10) verursacht wird.

8. Vorrichtung zur Montage und zur Befestigung nach einem der Ansprüche 1 bis 7, **dadurch gekennzeichnet, dass** das Verkleidungselement (1) zumindest rückwärtig des Randteils (1'), der das Befestigungsteil (3) trägt, eine Verformungslinie oder einen verformbaren Bereich aufweist, die bzw. der ein örtliches Zusammenfalten des Verkleidungselements (1) beim Verschieben des Randteils (1') gestattet, wobei der verbleibende Teil (1") des Verkleidungselements (1) bei der Verschiebung an der Karosserie (11) des Kraftfahrzeugs befestigt bleibt.

9. Vorrichtung zur Montage und zur Befestigung nach einem der Ansprüche 1 bis 8, **dadurch gekennzeichnet, dass** das Verkleidungselement (1) vollständig aus einem verformbaren Material besteht und durch Einrasten oder durch Eingriff über Verbindungspunkte (12), die über die Fläche des Verkleidungselements (1), mit Ausnahme des Randteils (1'), verteilt sind, an der Karosserie befestigt ist.

10. Vorrichtung zur Montage und zur Befestigung nach einem der Ansprüche 1 bis 9, **dadurch gekennzeichnet, dass** der Randteil (1') des Verkleidungselements (1) an seinem Uberlappungsteil des Verkleidungselements (2) und mindestens an einer von dem Befestigungsteil (3) entfernten Stelle durch ein mit mehreren Stiften, vorzugsweise mit quadratischen oder hexagonalen Köpfen, die in dem das Verkleidungselement (2) abdeckenden Textilmaterial festgehakt werden sollen, versehenes Materialband (17) befestigt und an der Rückseite des Überlappungsteils des Randteils (1') angefügt ist.

11. Vorrichtung zur Montage und zur Befestigung nach Anspruch 4, **dadurch gekennzeichnet, dass** die Grundplatte (7) des Befestigungsteils (3) auf ihrer Seite, die an den Randteil (1') gedrückt werden soll, mehrere Einbuchtungen oder Mulden (7') zur Aufnahme des Klebemittels aufweist und dass der plattenförmige Kopf (8") einen abgerundeten unteren Rand (13) und gegebenenfalls einen vorspringenden Rand (13') auf der vorderen Seite bei Eingriff des Befestigungsteils (3) in der Nut (5) aufweist.

12. Kraftfahrzeug mit insbesondere einer Dachverkleidung und Verkleidungen der Heckpartien, die mit dieser Letzteren an überlappenden Teilen zusammengefügt sind, das mit aufblasbaren hinteren Seiten-Sicherheitskissen, die sich in der Nähe der überlappenden Teile unter der Dachverkleidung befinden, ausgestattet ist, **dadurch gekennzeichnet, dass** die Verkleidungen (1) der Heckpartien mittels Vorrichtungen nach einem der Ansprüche 1 bis 11, insbesondere an der Dachverkleidung (2) und gegebenenfalls an der Karosserie (11) des Kraftfahrzeugs montiert und befestigt sind.

## Claims

1. Device for installing and fixing a lining or covering element, for example a lining for a rear side panel or for a window pillar of a motor vehicle, at least one edge part (1') of the said element (1) being provided with an attachment piece (3) for attaching it to another, fixed lining element (2), for example a roof lining, in a region of overlap between the abovementioned first and second lining elements (1 and 2), the said second lining element (2) being provided with holes (4, 5, 6), or with an add-on piece (15) having holes (4, 5, 6) defining for the said attachment piece (3) an installing opening (4) and positions of assembly of the said lining elements (1 and 2) before and after movement under stress of at least the said edge part (1'), in such a way as to allow a limited movement under stress of at least an edge part of the said element, without detachment;
the attachment piece (3) consisting partly of a baseplate (7) designed to be fixed, for example by adhesive bonding, to that face of the edge part (1') which is turned towards the second lining element (2), and partly of a projecting gripping part (8) composed of a connecting portion (8'; 14) extending approximately at right angles to the said baseplate (7) and ending in a head part (8"; 14') whose area in planar projection is greater than the area of the cross section of the connecting portion (8'; 14);
the second lining element (2) comprising a hole formed by, or a piece (15) comprising, an orifice (4) allowing the passage of the head (8"; 14') and continued by a slot (5) whose width is less than the corresponding dimensions of the said head (8"; 14'); and
the hole (6) in the second lining element (2) or in the add-on piece (15) added to the latter, which determines the position of assembly after movement under stress of the edge part (1'), being situated at a predetermined distance from the position of assembly before movement, and having dimensions that do not allow passage of the head (8"; 14');
which device is **characterized in that** the said hole (6) determining the position of assembly after movement under stress of the edge part (1') is separated from the position of assembly before movement by at least one segment or add-on element forming a barrier or brake (9) or by a portion of material forming the said second lining element (2), of predetermined width.

2. Device for installing and fixing a lining or covering element, for example a lining for a rear side panel or for a window pillar of a motor vehicle, at least one edge part (1') of the said element (1) being provided with an attachment piece (3) for attaching it to another, fixed lining element (2), for example a roof lining, in a region of overlap between the abovementioned first and second lining elements (1 and 2), the said second lining element (2) being provided with an add-on piece (15) having holes (4, 5, 6) defining for the said attachment piece (3) an installing opening (4) and positions of assembly of the said lining elements (1 and 2) before and after movement under stressed of at least the said edge part(1'), in such a way as to allow a limited movement under stress of at least an edge part of the said element, without detachment; the attachment piece (3) consisting partly of a baseplate (7) designed to be fixed, for example by adhesive bonding, to that face of the edge part (1') which is turned towards the second lining element (2), and partly of a projecting gripping part (8) composed of a connecting portion (8'; 14) extending approximately at right angles to the said baseplate (7) and ending in a head part (8"; 14') whose area in planar projection is greater than the area of the cross section of the connecting portion (8'; 14); and
the second lining element (2) comprising a piece (15) comprising an orifice (4) allowing the passage of the head (8"; 14') and continued by a slot (5) whose width is less than the corresponding dimensions of the said head (8"; 14');
which device is **characterized in that** the add-on piece (15) with holes (4, 5, 6) consists of an insert, made for example of injection-moulded plastic, designed to be installed in an orifice (16) of corresponding shape provided in the second lining element (2) and designed to be attached to the latter, for example by adhesive bonding, in the respective overlapping edge regions (15', 16'), the holes (4, 5, 6) being contiguous and provided at the bottom of an impression or depression (15") set back from the plane of the edge region (15') of the said insert, and the hole part (6) that determines the position of assembly after movement under stress of the edge part (1') consisting of a continuation with progressive narrowing of the slot (5).

3. Installing and fixing device according to Claim 1 or 2, **characterized in that** the second lining element (2) has a means defining the position of assembly of the lining elements (1 and 2) before movement under stress of the said edge part (1').

4. Installing and fixing device according to any one of Claims 1 to 3, **characterized in that** the connecting portion (8') consists of a sleeve, preferably cylindrical, with a circular or other cross section, and **in that** the head (8") is in the shape of a plate extending substantially parallel to the said baseplate (7) and consists of a disc, the diameter of the said disc (8") being greater than the diameter of the said sleeve (8').

5. Installing and fixing device according to any one of Claims 1 to 3, **characterized in that** the connecting portion (14), in the form of a sleeve or rod, ends in a substantially frustoconical head (14') split longitudinally in two or more cutting planes that intersect each other along the longitudinal axis and whose greatest diameter (D) is at least equal to, and preferably slightly greater than, the diameter of the installing opening (4).

6. Installing and fixing device according to any one of Claims 1 and 3 to 5, **characterized in that** the second lining element (2) has a reinforced and/or stiffened structure around the hole part (6) defining the position of assembly after movement of the edge part (1') and, optionally, along the edges of the slot (5) and on both sides of that portion of material (9) which separates the bottom (5') of the latter from the abovementioned hole (6).

7. Installing and fixing device according to any one of Claims 1 to 6, **characterized in that** the direction and length of the movement under stress of the edge part (1') of the first lining element (1) are such as to produce, at the end of the said movement under stress, a gap allowing the deployment through it of an airbag (10) situated initially in the folded state underneath the second lining element (2), for example in the form of roof lining, the movement under stress of the said edge part (1') being brought about by the said deployment of the said airbag (10).

8. Installing and fixing device according to any one of Claims 1 to 7, **characterized in that** the lining element (1) has at least at the rear of the edge part (1') supporting the attachment piece (3) a line of deformation or a deformable region allowing local folding of the said lining element (1) during the movement of the said edge part (1'), the remaining part (1") of the lining element (1) remaining fixed to the bodywork (11) of the motor vehicle during the said movement.

9. Installing and fixing device according to any one of Claims 1 to 8, **characterized in that** the lining element (1) consists entirely of a deformable material and is fixed to the bodywork (11) by a number of snap-fitting or engaging connection points (12) distributed on the surface of the said lining element (1), with the exception of the edge part (1').

10. Installing and fixing device according to any one of Claims 1 to 9, **characterized in that** the edge part (1') of the lining element (1) is attached, where it overlaps the lining element (2) and at at least one location remote from the attachment piece (3), by a strip (17) of material carrying a plurality of spikes, preferably with square or hexagonal heads, designed to lock into the textile material covering the lining element (2), this strip being applied to the rear face of the said overlapping portion of the edge part (1').

11. Installing and fixing device according to Claim 4, **characterized in that** the baseplate (7) of the attachment piece (3) possesses, on its face designed to be applied to the edge part (1'), a plurality of sinks or depressions (7') for holding adhesive and **in that** the plate-shaped head (8") has a rounded lower edge (13) and, optionally, a projecting lip (13') on the forward side during the engagement of the said attachment piece (3) into the slot (5).

12. Motor vehicle comprising in particular a roof lining and a plurality of rear side panel linings attached to the latter by overlapping portions, the said vehicle being equipped with rear side airbags underneath the roof lining, near the said overlapping portions, which vehicle is **characterized in that** the rear side panel linings (1) are installed and fixed by means of devices according to any one of Claims 1 to 11, notably to the roof lining (2) and, optionally, to the bodywork (11) of the motor vehicle.
